# EUROPÄISCHE PATENTSCHRIFT

(11) **EP 0 529 422 B1**
(45) Veröffentlichungstag und Bekanntmachung des Hinweises auf die Patenterteilung: **19.01.1994**
(21) Anmeldenummer: 92113790.7
(22) Anmeldetag: 13.08.1992
(51) Int. Cl.: F28F 25/08, B01J 19/32, C02F 3/10

(54) **Einbaukörper**
Filling element
Elément de remplissage

(30) Priorität: 23.08.1991 AT 1660/91
(43) Veröffentlichungstag der Anmeldung: 03.03.1993
(73) Patentinhaber: FAIGLE, Heinz, A-6971 Hard (AT)
(72) Erfinder: FAIGLE, Heinz, A-6971 Hard (AT)
(74) Vertreter: Hefel, Herbert, Dipl.-Ing.

(56) Entgegenhaltungen:
- CH-A- 556 010
- US-A- 3 952 077

## Beschreibung

Die Erfindung bezieht sich auf einen Einbaukörper für Anlagen, in denen Medien im Direktkontakt sind, nach den Merkmalen des Oberbegriffes des Patentanspruches 1.

Solche Einbauten verwendet man zumeist zum direkten Energieaustausch, bei dem die energietauschenden Medien in unmittelbarem Kontakt stehen, also ohne durch eine Wand getrennt zu sein, beispielsweise beim Wärmeaustausch in Kühltürmen, zum direkten Stoffaustausch zwischen Medien, beispielsweise beim Verdunstungskühlanteil in Kühltürmen oder bei Stripprozessen, zur Reaktion zwischen Medien, beispielsweise in chemischen Kolonnen, zur Förderung biologischer Abläufe, beispielsweise in Tropfkörpern zur Abwasserreinigung, für Separationsvorgänge, beispielsweise Tropfenabscheidern in Kühltürmen, für Flüssigkeitsverteiler, Luftzubringer und ähnliche Anwendungen.

Ein Tropfenabscheider dieser Art ist beispielsweise in der DE-PS 27 38 257 gezeigt und beschrieben. Die plattenartigen, wellig geformten Folien sind so zueinander angeordnet und zu einem Rasterkörper vereinigt, daß die in der Schichtung der Folien einander unmittelbar benachbart liegenden Abschnitte über die Höhe des Körpers bzw. der Folien aneinander direkt anliegen und entlang diesen direkt aneinander anliegenden Abschnitten mit Wellenberg gegen Wellental miteinander dicht verbunden, in der Regel verklebt oder verschweißt sind. Die so entstehenden Strömungskanäle sind in jeder ihrer Querschnittsebenen umfangsgeschlossen, so daß ein solcher Tropfenabscheider im wesentlichen aus einer Vielzahl nebeneinander und quer dazu aneinander liegender einzelner Strömungskanäle besteht. Diese Strömungskanäle besitzen über ihre Länge eine oder mehrere Umlenkungen und sie weisen auch über ihren Längsverlauf unterschiedlich große und gegebenenfalls unterschiedlich geformte Querschnitte auf. Die Begriffe "aneinander" und "nebeneinander" sind im Folgenden im vorstehend deklarierten Sinne zu verstehen. Summarisch werden beide Begriffe als "benachbart" verstanden, zumeist ist "nebeneinander" gemeint, speziell wenn die Verbindung nebeneinanderliegender Kanäle durch Spalte beschrieben wird.

Füllkörper bzw. Tropfenabscheider vergleichbarer Art zeigen folgende Druckschriften:
DGM 18 63 231, DE-AS 12 87 096, DE-AS 12 93 796, DE-AS 15 44 115, DE-OS 18 09 095, US-PS 25 55 125. Die umfangsgeschlossenen Strömungskanäle aller der dort gezeigten Bauformen verlaufen in Ebenen, in welchen sie jedoch eine oder mehrere Umlenkungen zeigen. Einem ersten Anschein entgegen, gilt dies auch für die genannte DE-AS 15 44 115, denn die Umlenkungen der die Strömungskanäle seitlich begrenzenden Folien schwingen parallel zur gleichen Ebene, zu der auch die Schottenwände parallel sind.

Füllkörper mit Strömungskanälen, deren Achsen einen räumlichen Verlauf zeigen, sind gezeigt und beschrieben in folgenden Druckschriften:
EU-OS 03 61 225, DE-AS 17 19 475, DE-PS 10 59 888.

In diesem Zusammenhang ist auch die CH-PS 556 010 zu nennen. Diese zeigt und beschreibt einen Kontaktkörper für Stoffaustausch, insbesondere Wärmeaustausch zwischen einem flüssigen und einem gasförmigen Medium. Dieser Kontaktkörper ist aus identisch geformten Rieselplatten hergestellt. Diese Platten sind ebenfalls rinnenartig verformt, wobei die innerhalb eines Paketes aufeinanderfolgenden Platten so angeordnet sind, daß sich die Wellenzüge benachbarter Platten kreuzen. Wellentäler und Wellenberge oder Wellengrate benachbarter Platten berühren sich nur punktförmig. Darüber hinaus sind diese Wellentäler bzw. Wellenberge oder Wellengrate über ihre Länge abschnittsweise abgeflacht, so daß in der Folge, wenn solche Rieselplatten zu einem Paket aneinandergefügt werden, nur in einem Teil dieser Kreuzungspunkte und Kreuzungsbereiche die Wellentäler bzw. Wellengrate benachbarter Platten miteinander verbindbar sind. Das hat zur Folge, daß in horizontaler Richtung gesehen sich eine im Querschnitt über den gesamten Körper durchlaufende spaltförmige Öffnung zeigt, deren tatsächlicher Verlauf aber nicht spaltförmig ist. Diese spaltförmige Sicht der Öffnung ergibt sich nur aus der Normalprojektion. In Wirklichkeit ist der Verlauf dieses Querkanales außerordentlich kompliziert. Bei diesem vorbekannten Rieselkörper wird das flüssige Medium von der Oberseite her aufgegeben, wogegen das gasförmige Medium den Kontaktkörper im wesentlichen quer zur Aufgaberichtung durchströmt. Die in dieser vorveröffentlichten Druckschrift beschriebene Maßnahme dient dazu, den Druckverlust des durchströmenden Mediums wesentlich zu verringern, also offenbar den Strömungswiderstand zu verkleinern. Daß dies mit der dort vorgeschlagenen Maßnahme gelingt, ist durchaus glaubwürdig, da bei dieser vorbekannten Konstruktion in Querrichtung, also in der Richtung des strömenden Gases, ein sozusagen offener Kanal geschaffen wird, durch den das Gas frei hindurchströmen kann. Ob das hier frei durchströmende Gas aber wesentlich zum Stoff- oder Energieaustausch beizutragen vermag, ist zweifelhaft, da ja hier das strömende Gas sozusagen freie Fahrt erhält und den Rieselkörper dieser Bauart nicht mehr auf einem vielfach verschlungenen Weg passieren muß. Der Strömungswiderstand wird sich durch die dort beschriebene Maßnahme ohne Zweifel erheblich verringern, ebenso erheblich verringern wird sich aber auch die Effizienz dieses Kontaktkörpers.

Ausgehend von diesem Stand der Technik schlägt die Erfindung bei einem Einbaukörper der eingangs erwähnten Art jene Maßnahmen vor, die Inhalt und Gegenstand des kennzeichnenden Teiles des Patentanspruches 1 sind. Dank dieses Vorschlages ist es möglich, daß die in einem Strömungskanal befindlichen Medien auf ihrem Weg durch den Einbaukörper wenigstens zum Teil den Strömungskanal wechseln können, indem sie über den erwähnten Spalt in den folgenden der nebeneinander liegenden Strömungskanäle gelangen. Damit ist den die Strömungskanäle durchsetzenden Medien eine Möglichkeit geboten, wenigstens zum Teil in einen benachbarten Strömungskanal zu gelangen, wobei das Ausmaß dieser Möglichkeit hauptsächlich abhängig ist von der Größe und der Gestalt des Spaltes, dessen Querschnitt nur einen Bruchteil der durch ihn verbundenen Strömungskanäle beträgt. Wie Versuche zeigen, wird dadurch die Effizienz solcher Einbaukörper in überraschender Weise verbessert.

Anhand der Zeichnung werden Ausführungsbeispiele näher erläutert, ohne dadurch die Erfindung darauf einzuschränken. Es zeigen:
- Fig. 1: einen Rasterkörper herkömmlicher Bauart in Ansicht;
- Fig. 2: im Schnitt nach der Linie II-II in Fig. 1 und
- Fig. 3: von der Seite;
- Fig. 4: einen Einbaukörper, hergestellt aus Folien, wie sie beim Rasterkörper nach den Fig. 1 bis 3 zusammengefügt worden sind, jedoch in erfindungsgemäßer Gestalt in Ansicht;
- Fig. 5: im Schnitt nach der Linie V-V in Fig. 4 und
- Fig. 6: im Schitt nach der Linie VI - VI in Fig. 4
- die Fig. 7 bis 21: verschiedene Ausführungen des Verlaufes des Spaltes über seine Tiefe;
- Fig. 22: ein Detail eines einen Spalt begrenzenden Abschnittes;
- Fig. 23 und Fig. 24: je ein Detail im Bereich einer Verbindungsstelle;
- Fig. 25: eine Variante zum Einbaukörper nach den Fig. 4 bis 6 mit mehrfach gewundenen Strömungskanälen;
- Fig. 26: einen perspektivischen Ausschnitt aus einem Einbaukörper mit schematischer Darstellungen von Varianten einiger Spaltformen und -Verbindungen.

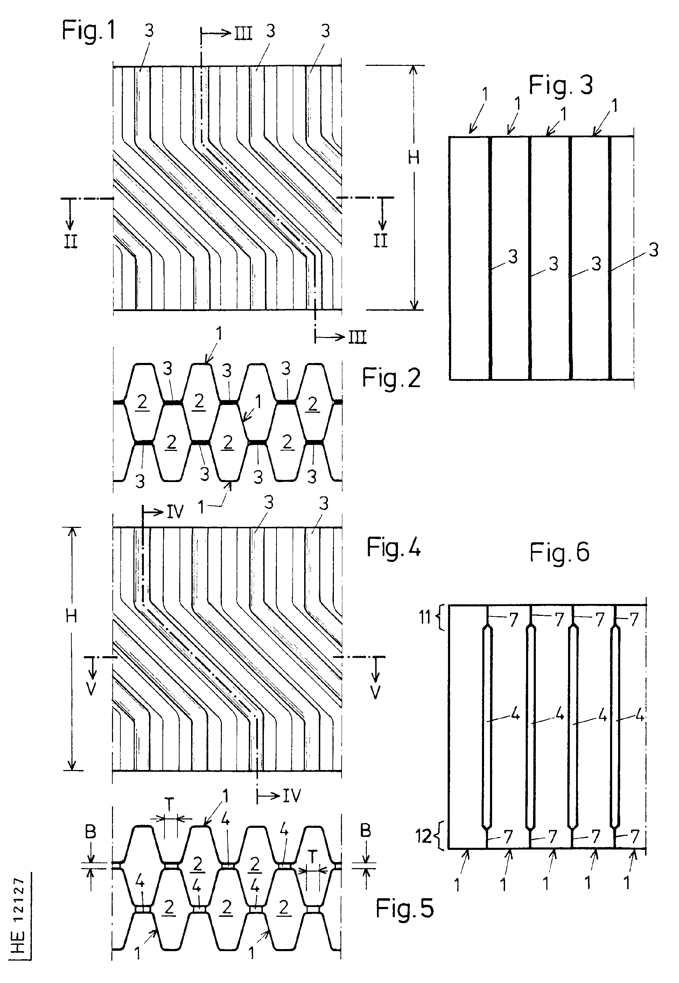

Der als Tropfabscheider vorgesehene Rasterkörper bekannter Bauart nach den Fig. 1 bis 3 besteht aus einer Vielzahl von wellenförmig geformten plattenartigen Folien 1. Diese plattenartigen Folien 1 sind zur Bildung von Strömungskanälen 2 aneinandergefügt, und zwar ist hier Wellental gegen Wellenberg aneinander gesetzt. Die einzelnen Strömungskanäle 2 verlaufen in Ebenen, zeigen jedoch in ihrem Verlauf zwei Umlenkungen. Die einander unmittelbar benachbart liegenden Abschnitte 3 jeweils zweier in Schichtung angeordneter Folien liegen aneinander an und sind in diesen Abschnitten 3 dicht miteinander verklebt oder verschweißt, und zwar über die gesamte Höhe H des Rasterkörpers, so daß die einzelnen Strömungskanäle 2 umfangsgeschlossen sind und zwar über ihren gesamten Verlauf. Der Füllkörper, in diesem geschilderten Fall ein Tropfenabscheider nach dem Stand der Technik und nach diesen Fig. 1 bis 3 besteht also in seiner Gesamtheit aus einer Vielzahl nebeneinander und aneinander liegender, umfangsgeschlossener, einzelner Strömungskanäle 2.

Die Fig. 4 bis 6 zeigen nun einen Einbaukörper der erfindungsgemäßen Art, der aus Folien aufgebaut ist, die jenen des Rasterkörpers nach den Fig. 1 bis 3 entsprechen, aber mit dem Unterschied, daß die einander unmittelbar benachbart liegenden Abschnitte jeweils zweier nebeneinander angeordneter Folien 1 ausschließlich zonenweise an den Verbindungsstellen 7 miteinander verbunden sind, jedoch über einen Teil ihrer Länge zur Bildung eines die nebeneinander liegenden Strömungskanäle verbindenden Spaltes 4 voneinander etwas distanziert sind. Wie aus Fig. 6 ersichtlich, sind die nebeneinander liegenden Folien hier nur jeweils in der oberen 11 bzw. unteren Zone 12 miteinander verbunden. Zur Bildung des Spaltes 4 können im oberen Abschnitt 11 und im unteren Abschnitt 12 in den Verbindungsbereichen Distanzplättchen eingefügt sein. Anstelle von solchen Distanzplättchen können aber beispielsweise die Folien an diesen Stellen einseitig oder beidseitig so weit ausgeformt werden, daß sie nur in diesem Bereich unmittelbar aneinander anliegen und hier dicht miteinander verbindbar sind. Die Folien können in jenen Zonen, in welchen sie miteinander verbunden werden, auch vorspringende Erhebungen in Form von Zapfen, eckigen oder gerundeten Scheiben, Schweißpunktscharen, Druckknöpfen o. dgl. angeformt haben und gegebenenfalls korrespondierende Einsenkungen auf dem zutreffenden Abschnitt der benachbarten Folie.

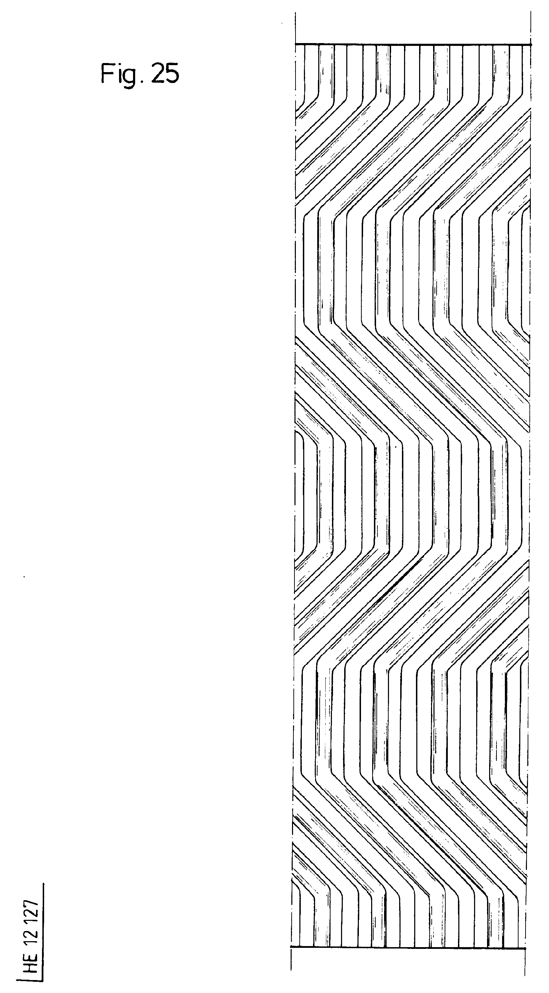

Im dargestellten Ausführungsbeispiel weisen die Strömungskanäle zwei Umlenkungen in Strömungsrichtung auf. Es liegt im Rahmen der Erfindung, diese Strömungskanäle in Strömungsrichtung mit mehreren Umlenkungen auszustatten, so daß sie einen mehrfach gewundenen, zick-zack- oder schlangenlinienartigen Verlauf zeigen, wobei diese Strömungskanäle in einer Ebene oder aber auch räumlich verlaufen können (Fig. 25).

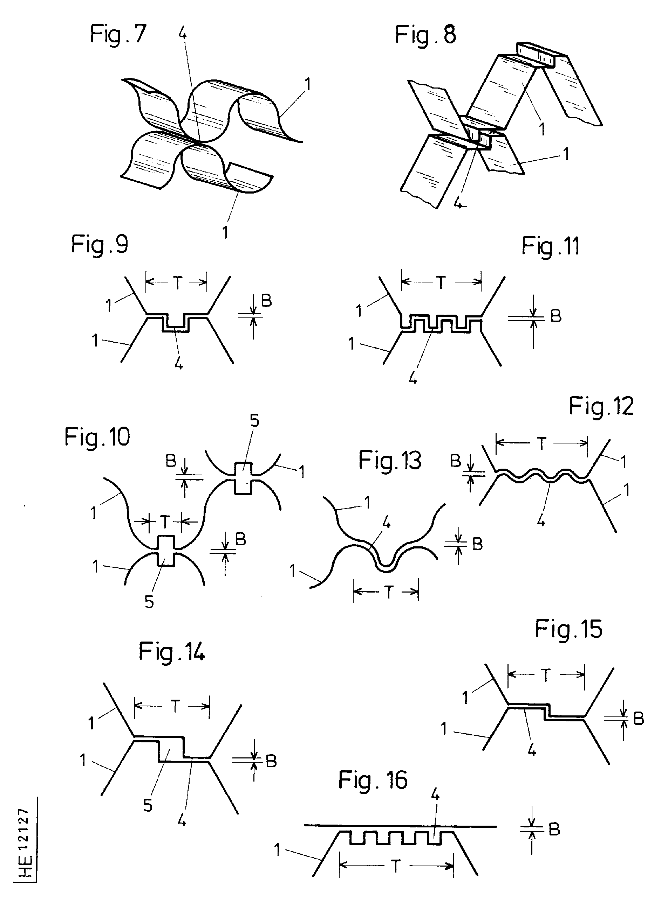

Zu den für die Gestalt der Spalte gewählten Bezeichnungen wird auf die Fig. 5 sowie die Fig. 9 bis 17 verwiesen; zur Gestalt an sich auf die Beispiele laut Fig. 7 bis 22.

Die Breite oder Weite B des Spaltes 4 ist abhängig von der Dicke der eingefügten Distanzplättchen bzw. der Größe und Art der Ausformung der Folie im Bereich der Verbindungsstellen 7; die Tiefe T des Spaltes ist abhängig von der Ausgestaltung und Ausformung der Folien und deren Wellung.

Sind hier in den Figuren Einbaukörper gezeigt, die ausschließlich aus gewellten Folien aufgebaut sind, so sei an dieser Stelle noch vermerkt, daß ein solcher Körper auch aus planen und gewellten Folien aufgebaut sein kann, wobei dann plane und gewellte Folien im Wechsel aufeinander folgen.

In den Zeichnungen ist ein Einbaukörper gezeigt, dessen Strömungskanäle in Ebenen verlaufen, wobei diese Strömungskanäle zumindest zwei Umlenkungen besitzen. Die Erfindung ist auch bei anders geformten Einbaukörpern anwendbar, also bei solchen, deren Strömungskanäle einen räumlichen Verlauf besitzen. Auch die Art der Wellung der Folie ist für die gegenständliche Erfindung nicht wesentlich. Der Begriff Wellung ist ganz allgemein zu verstehen, unabhängig davon, ob sie sinusartig oder ähnlich verläuft und/oder eckige Konturen aufweist.

Die Breite oder Weite B eines solchen Spaltes kann je nach Einsatzzweck des Einbauköpers sehr unterschiedlich sein. So kann beispielsweise die Breite des Spaltes im Bereich der Oberflächenrauheit bzw. der herstellungsbedingten Mikrowelligkeit der plattenartigen Folie liegen. Auch hier kann dann noch von einer Spaltbreite gesprochen werden, wenngleich dem freien Auge das enge Aneinanderliegen zweier glatt aussehender Folienabschnitte als dicht erscheint. Ein einfacher Versuch beweist dies: Wenn zwei nicht aus wasserabstoßendem Werkstoff bestehende Folien hauchdünn naß gemacht sind, gelingt es auch bei kräftigem Zusammendrücken nicht, die Berührungsstelle der Folien trocken zu pressen. Wissenschaftlich ist ähnliches im Bereich der Tribologie untersucht und dabei festgestellt worden: Sogar geschliffene, gegeneinander liegende Gleitlageroberflächen im scheinbaren Kontaktbereich weisen eine tatsächliche Berührflächensumme von weniger als 5% auf.Andererseits werden aber auch Spalte mit größerer Breite benötigt. Diese Breite ist von Anwendungsfall zu Anwendungsfall verschieden. Sie kann durch ihr Verhältnis zu einer Querschnittsabmessung der durch den Spalt miteinander verbundenen Strömungskanäle definiert werden. In der Regel beträgt die Breite des Spaltes vorzugsweise höchstens ein Fünftel des größten Durchmessers des Strömungskanals. Praktische Versuche haben gezeigt, daß sich eine Spaltbreite oder Spaltweite von 0,05 bis 1,00 mm insbesondere bei Tropfenabscheidern bewährt hat.

Über die Höhe H des Einbaukörpers können die einander unmittelbar benachbart liegenden Abschnitte jeweils zweier benachbart angeordneter Folien an mehreren Stellen miteinander verbunden sein, so daß über die Länge eines Strömungskanales mehrere Spalte aufeinander folgen. Auf die Länge eines Strömungskanales bezogen beträgt die Länge des Spaltes zumeist ca. ein bis zwei Drittel, wobei dieser Spalt wie erwähnt mehrteilig sein kann, über die Länge des Strömungskanales also mehrere Spalte 4 und mehrere Verbindungsstellen 7 aufeinanderfolgen. Im Extrem sind sie als eine Vielzahl von Abständen zwischen mit geringem Abstand hintereinander folgenden Verbindungspunkten oder -linien ausgeführt.

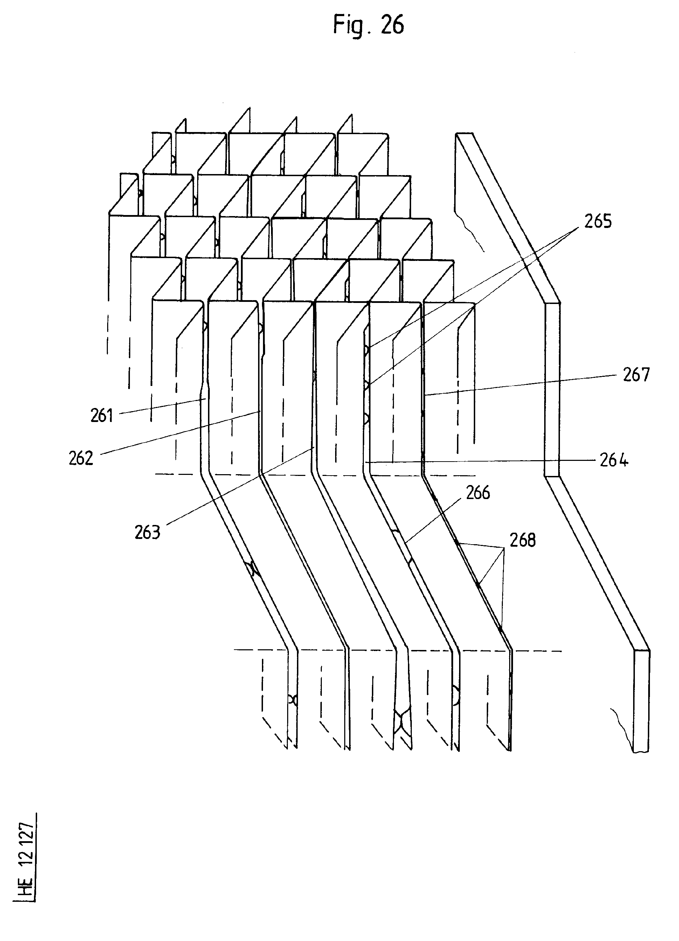

Aus der Vielzahl möglicher Längsformen der Spalte und deren Verbindungsarten sind (ohne Spalt-Tiefenstruktur) in Fig. 26 einige Varianten dargestellt. Gezeigt ist ein weiter Spalt 261, ein enger Spalt 262, ein konischer Spalt 263, ein geteilter Spalt 264 mit kurzer Verbindung 265 und langer Verbindung 266 sowie ein enger Spalt 267 mit einer Reihe von Punktverbindungen 268.

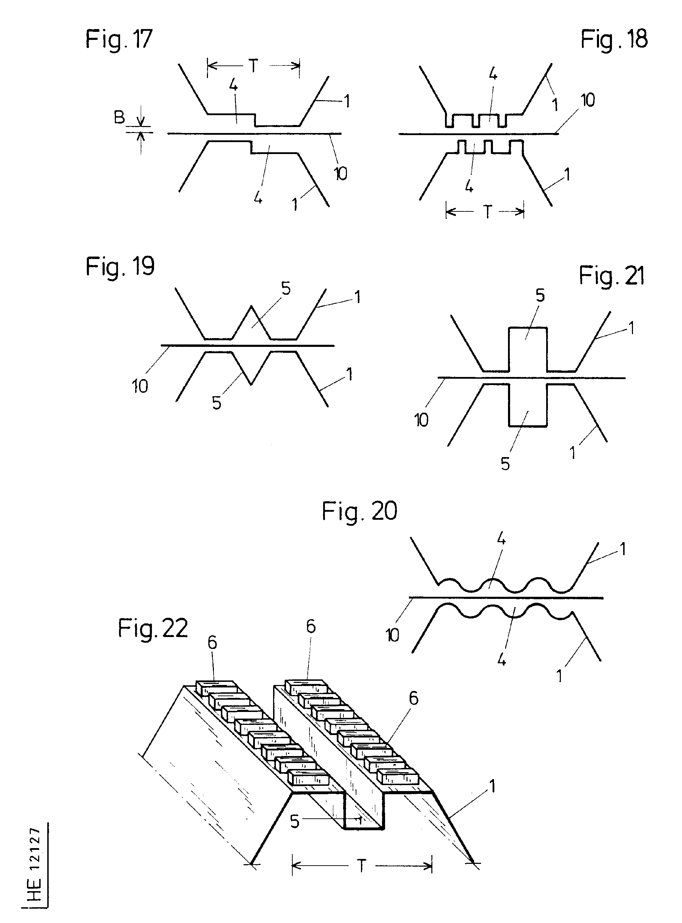

Zwischen zwei benachbarten Strömungskanälen kann der Spalt ganz unterschiedlich verlaufen, also über seine Tiefe T sehr verschieden ausgebildet sein. Ausführungsbeispiele für den Verlauf des Spaltes über seine Tiefe T zeigen die Fig. 7 bis 21. Die Fig. 7 zeigt einen Spalt 4, der nur als eine Linie in der engsten Stelle zwischen den gerundeten Amplitudenscheiteln einander gegenüberliegender Folien entlang verläuft. Die Amplitudenscheitel können, siehe Fig. 5, aber auch in ihrer engsten Annäherungsstelle eben ausgebildet sein und demgemäß hat auch der Spalt 4 einen ebenen Verlauf sowohl in der seiner Tiefe als auch seiner Länge nach. Die Figuren 8, 9, 11, 14 und 15 zeigen Spalte 4, die über ihre Tiefe T einen abgewinkelten Verlauf zeigen. Bei den Ausführungsformen nach den Fig. 12 und 13 zeigen die Spalte 4 über ihre Tiefe einen wellenförmigen Verlauf. Beim Ausführungsbeispiel nach Fig. 10 sind die den Spalt 4 über seine Tiefe T begrenzenden, spiegelsymmetrisch gestalteten Abschnitte im Mittelbereich ausgebuchtet, so daß der Spalt 4 über seine Länge gesehen in seinem Mittelbereich eine rinnenartige Erweiterung 5 besitzt. Beim Ausführungsbeispiel nach Fig. 16 liegen dem einen gezahnt verlaufenden, den Spalt 4 begrenzenden Abschnitt einer gewellten Folie 1 ein planer Abschnitt einer anderen Folie gegenüber. Die Fig. 17 bis 21 zeigen solche Ausführungsformen, bei welchen zwischen zwei gewellten Folien 2 je eine plane Folie 10 liegt.

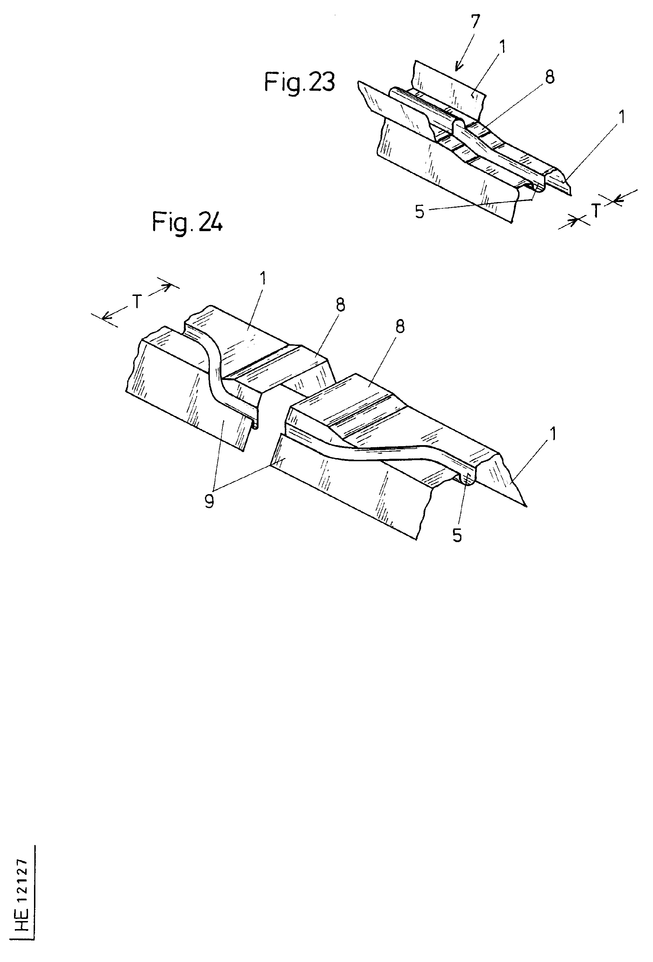

Besitzt der Spalt 4 eine rinnenartige Erweiterung 5, wie dies bei den Ausführungsbeispielen nach den Fig. 10 und 14 oder 19 und 21 veranschaulicht ist, so sind die Folien in jenen Bereichen, in welchen sie zur Verbindung aneinander anliegen, dazu korrespondierend geformt, so daß die rinnenartigen Erweiterungen 5 auch durch die Verbindungsstelle 7 hindurch verlaufen, sich also über die Länge des Spaltes hinweg fortsetzen und hier ein umfangsgeschlossenes Rohrstück bilden. Dies ist in Fig. 23 schematisch veranschaulicht. Zur Bildung einer Verbindungsstelle 7 besitzen die Folien 1 Ausformungen 8, die von der rinnenartigen Erweiterung 5 durchsetzt sind, wobei diese rinnenartigen Erweiterungen 5 im Bereich der Verbindungsstelle 7 ein umfangsgeschlossenes Rohrstück bilden. Wird ein Einbaukörper dieses Aufbaues als Ganzes betrachtet, so erstrecken sich in diesem Falle die rinnenartigen Erweiterungen 5 von Rand zu Rand bzw. über die gesamte Länge seiner Strömungskanäle.

Falls bei schmutzführenden oder Ausscheidungen absondernden Medien im Bereich der Verbindungsstellen 7 Verstopfungsgefahr besteht, werden, wie Fig. 24 im Detail veranschaulicht, die rinnenartigen Erweiterungen 5 vor den Ausformungen 8 für die Verbindungsstelle 7 von der Spaltmitte seitwärts abgezogen und im Bereich der Verbindungsstelle 7 entlang der Flanke 9 der Folienwellung geführt, bis sie nach der Ausformung 8 für die Verbindungsstelle 7 wieder in die Spaltmitte einmündet. Ein solcher Rinnenverlauf in der Flanke 9 im Bereich der Ausformungen 8 für die Verbindungsstellen 7 werden an jenen Seiten vorgesehen, wo im zugeordneten Kanalabschnitt ein reduzierter Druck und eine reduzierte Luftgeschwindigkeit zu erwarten sind. Sowohl die Druckverteilung wie auch die Geschwindigkeitsverteilung sind insbesondere bei richtungswechselnden Kanälen über einen jeweiligen Querschnitt eines Kanalabschnittes gesehen ungleich groß.

Die Verbindung der Spalterinnen miteinander durch Rohre oder Flankenrinnen ist für die aus in lotrechter Aufstellung miteinander verbundenen gewellten Folien bestehenden Tropfenabscheider wichtig: Bei Kühltürmen nehmen die Tropfenabscheider von unten her den mit Wassertröpfchen durchsetzten Luftstrom in einem ersten, lotrecht stehenden Abschnitt der Kanäle auf. Sodann wird der Luftstrom durch den Verlauf des Kanales in einem Winkel zur Lotrechten umgelenkt, wodurch der erste Teil der Tröpfchen infolge ihrer Trägheit unter der Wirkung der Fliehkraft an die Kanalwände geschleudert wird und dort agglomeriert, bis das Gewicht der sich bildenden Tropfen größer ist als die durch die Einwirkung des Luftstromes ausgeübte Haltekraft, und dann rinnen die Tropfen an den Wänden bzw. in dem an den Folienverbindungsstellen befindlichen Zwickeln der Kanäle bei den Tropfenabscheidern bekannter Bauart nach unten ab.

Bei Tropfenabscheidern der erfindungsgemäßen Bauart bringen die Spalte den zusätzlichen überraschenden Effekt, daß die ausgeschleuderten Tröpfchen in den Spalten leichter agglomerieren können, und weil darüber hinaus im anschließenden Teil des benachbarten Strömungskanales ein geringerer Druck herrscht als in jenem Abschnitt des Kanals, aus dem die Tröpfchen ausgeschieden wurden, können die Tropfen dem Schleuder- und Luftdruck folgend durch den Spalt durchtreten und auf der anderen Seite abrinnen, bis sie zur nächstfolgenden Kanalumlenkung gelangen, wo sich dieser Vorgang in umgekehrter Fließrichtung durch den Spalt wiederholt. Bei einem engen Spalt, der wie eine Kapillare wirkt, ist die Adhäsion zwischen dem Wasser und den Spaltenwänden und/oder die Wasseragglomerisation in den gegebenenfalls auch noch durch in die Spalttiefen eingebaute Stufen, Wellen und andere Schikanen groß genug, so daß das flüssige Medium als Sperrflüssigkeit den Spalt gegenüber einem gasförmigen Medium verschließt. Die Luft muß daher den Kanalschlängelungen folgen und schleudert in den Druckseiten der Kanäle die Tropfen an bzw. in den Spalt.

Die in den Fig. 8 bis 21 gezeigten Profilierungen der Querschnittskonturen der Spalte 4 setzen einem einseitigen, höheren Druck der Luft einen größeren Widerstand als plane Spaltquerschnitte entgegen und zusätzlich finden die ausgeschleuderten Tröpfchen in den Profilierungen dieser Abschnitte mehr Adhäsionsflächen und eine ungestörtere Möglichkeit zum Agglomerieren und Abrinnen.

Dies wird noch durch die beschriebene, rinnenartige Erweiterung 5 im mittleren Bereich der Tiefe eines Spaltes 4 (Fig. 10, 14, 19, 21) gefördert, die darüber hinaus ein ungehindertes Ablaufen des abgeschiedenen Wassers ermöglicht. Bschränkt, aber dennoch wirksam, trifft dies auch auf die Formgebung nach den Fig. 16 bis 18 zu.

Die Umleitung der rinnenartigen Erweiterungen 5 der Spalten 4 auf die Flanken 9 der Kanäle werden an jenen Seiten vorgesehen, wo im zugeordneten Kanalabschnitt ein reduzierter Druck und eine reduzierte Luftgeschwindigkeit zu erwarten sind. Sowohl die Druckverteilung wie auch die Geschwindigkeitsverteilung sind bei richtungswechselnden Kanälen über einen jeweiligen Querschnitt bzw. die jeweilige Strömungsrichtung eines Kanalabschnittes gesehen ungleich groß.

Fig. 22 zeigt in Schrägsicht einen spaltbegrenzenden Abschnitt einer gewellten Folie 1. Dieser Abschnitt besitzt eine wellen- bzw. zahnförmige Profilierung 6, die quer zur Längsrichtung des Spaltes verläuft. Die Achsen dieser einzelnen Profilierungen können rechtwinkelig oder schräg zur Längsrichtung des Spaltes stehen. Die so ausgeformten, den Spalt mitbildenden Abschnitte 4 können dabei so angeordnet sein, daß diese Profilierungen zahnartig ineinander greifen. Da die Achsen dieser Profilierungen quer zum Luftstrom im Strömungskanal 2 stehen, jedoch in jener Richtung liegen, in der die Tropfen ausgeschleudert werden, können die Tropfen sozusagen bevorzugt in den Spalt 4 eindringen und, wenn vorgesehen, auch in die Rinne 5.

Die vorstehenden Bemerkungen zur Arbeitsweise von Tropfenabscheidern legen es nahe, generell auf die in den erfindungsgemäßen Einbaukörpern herrschenden Verhältnisse der Medien zueinander und gegeneinander, auf die Strömungsbeeinflussung und deren Nutzung usw., bei allen im Oberbegriff zum Patentanspruch bzw. in der Einleitung zu dieser Beschreibung aufgezählten Verwendungsarten einzugehen:

Die erfindungsgemäßen Einbaukörper gehören zu den Raster-Lamellen-Systemen, die aus zu einem Paket verbundenen gewellten Folien, gegebenenfalls jeweils mit einer planen Folie zwischen den gewellten Folien, aufgebaut und dazu bestimmt sind, unterschiedliche Medien gemeinsam, also ohne sie trennende Zwischenwände, durchzuleiten.

Innerhalb dieser Gattung gehören sie zu zwei Arten, einerseits der Bauart, bei der die gewellten Folien so aneinanderliegend miteinander verbunden sind, daß sie von einem Folienrand zum anderen Folienrand durchgehende Kanäle bilden und diese in ihrem Verlauf Richtungswechsel aufweisen, wodurch die Querschnitte von verschieden gerichteten Kanalabschnitten unterschiedlich sind und dadurch in den Medienströmen Geschwindigkeits-und Druckdifferenzen von Abschnitt zu Abschnitt verursacht werden, andererseits zu der Bauart, bei der irgendwelche Distanzierungen zwischen den Folien des Lamellenpaketes vorgesehen sind. Dabei wurde in herkömmlichen Bauarten beabsichtigt, daß sich die Medien nicht nur in der Hauptrichtung bewegen, sondern ohne wesentliche Behinderung auch quer dazu, um Druck-und Mengendifferenzen zwischen den Kanälen auszugleichen. Um das zu erzielen, wurden die Distanzen groß gehalten und zusätzlich die gewellten Folien oftmals über Kreuz geschichtet. Im Gegensatz dazu werden erfindungsgemäße Maßnahmen vorgesehen, wie Verbindungen zwischen den benachbarten Kanälen beschaffen sein müssen, damit ein unbeschränktes Überströmen der Medien verhindert wird.

Die erfindungsgemäßen, in der vorliegenden Beschreibung im Detail erläuterten Maßnahmen ermöglichen es, die scheinbare Gegensätzlichkeit, einerseits die Geschwindigkeits- und Druckdifferenzen und die Hauptrichtung der Medienströme im Verlauf der verschieden gerichteten Kanalabschnitte weiter aufrecht zu erhalten, und andererseits dennoch Querwege zwischen den in einer Schar nebeneinanderliegenden Kanälen bereit zu halten.

Dies gelingt dadurch, daß die Verbindungen von Kanal zu Kanal durch Spalte geschieht, deren Anzahl bzw. Längen entlang des Kanalverlaufes und deren Gestaltung und Profilierung so gehalten ist, daß der Durchgang der Medien durch die Spalte erschwert wird, so daß die Hauptströmung der Medien nach wie vor in den Kanälen verbleibt.

Bei der Nutzung ergeben sich Varianten in Details der Einbaukörper- bzw. Wellen- und Kanal-Gestalt, je nachdem, ob der Körper für die Medien ein Mischsystem, ein Tauschsystem, ein Reaktionssystem oder ein Trennsystem fördern soll.

Bei Mischsystemen wird vor allem der Verwirbelungseffekt beim Richtungswechsel der Kanäle und die über die Kanalquerschnitte ungleiche Strömungsgeschwindigkeit des Medien-Gemenges ausgenützt. Zumeist wird aus Durchmischungsgründen die Summe der Durchtrittsquerschnitte der Spalte groß gehalten, aber nicht so groß, daß die Leitaufgabe der Kanäle unmöglich würde.

Bei Tauschsystemen wird ebenfalls der Verwirbelungseffekt durch Strömungslenkungen und ungleiche Strömungsgeschwindigkeiten in den Kanälen zur Vermengung der Medien benutzt, die Energie und/oder Stoffe untereinander austauschen sollen. Wenn die austauschenden Medien voneinander verschiedene Dichten und/oder Viskositäten, insbesondere aber unterschiedliche Aggregatzustände besitzen, tritt zusätzlich infolge der bereits besprochenen Wirkung der vor bzw. nach jedem Richtungswechsel unterschiedlichen Druck- und Geschwindigkeitsverhältnisse zwischen den beiden in jedem Kanal einander gegenüberliegenden Wänden und Spalten und deren Strömungsanteilen ein. Dadurch befinden sich die Medienanteile der einen Art auf der - bildhaft gesprochen - linken Seite des Spaltes und die Medien der anderen Art auf dessen rechter Seite.

Somit wirken sie erst recht durch die Spalte hindurch aufeinander ein. Bei dem nun folgenden nächsten Richtungswechsel kehren sich die Verhältnisse im Kanal um, was die unterschiedenen Medien zu entgegengesetzter Wanderung veranlaßt und bei der dadurch verursachten gegenseitigen Durchdringung zu neuen, austauschfördernden Berührungen führt. Besonders deutlich sind diese Vorgänge bei Flüssigkeit/Gas-Systemen, wie beispielsweise Rieselgitter in Kühltürmen, wo das heiße Wasser nicht nur Wärme, also Energie, an die Luft abgibt, sondern als Stoffaustausch auch Verdunstungspartikel des Wassers.

Bei Reaktionssystemen sind ähnliche Vorgänge wie bei den Tauschsystemen zu beobachten. Zum Mischeffekt der Medien und der chemischen oder biologischen Reaktion, auch durch die Spalte hindurch, kommt noch das Phänomen, daß manche Reaktionen unter mechanischer oder hydraulischer oder aerodynamischer Reibung, wozu neben dem Verwirbeln der Spalte-Effekt beiträgt, schneller und ergiebiger ablaufen als bei nur anderweitiger Energiezufuhr.

Bei biologischenn Reaktionen sind Bewuchserscheinungen mit zu beachten. Beispielsweise sollen in Tropfkörpern zur Abwasserreinigung die Spalte relativ groß bemessen sein, da die Substrate mit der fachmännisch biologischer Rasen genannten Kultur von Kleinstlebewesen in einer gewissen Dicke bis zur Fladenlösung, bewachsen werden, was zur Spaltverengung führt.

Auf das Trennsystem wurde in einem vorhergehenden Abschnitt bereits mit der Beschreibung der Vorgänge in einem Tropfenabscheider für Kühltürme eingegangen. Weitere Beispiele sind das Strippen von Gasen und Separationsvorgänge in flüssig/flüssig-, Gas/Gas- und Gas/flüssig-Systemen.

Wenn insbesondere bei den Trennsystemen im Rinnenverlauf die Spalten-Abschnitte miteinander verbunden sind, werden zumeist solche Gesamtrinnen an bzw. in den in der Hauptströmungsrichtung liegenden Enden verschlossen oder von vornherein in diesem Bereich nicht vorgesehen, damit das bereits abgeschiedene Medium dort nicht nach oben austreten kann.

Als Werkstoffe für die beschriebenen Füllkörper dienen zumeist Kunststoffe oder Metalle in Foliendicken von 0,2 bis 1 mm. Für Sonderfälle können dickere Wandungen oder andere Werkstoffe, wie Glas oder Keramik nützlich sein.

Wird ein Einbaukörper in seiner Gesamtheit betrachtet, so können alle in ihm vorgesehenen Spalte hinsichtlich ihrer Größe und Ausgestaltung gleich sein. Es liegt aber auch im Rahmen der Erfindung, die Spalte eines Einbaukörpers hinsichtlich ihrer Größe und Ausgestaltung unterschiedlich auszubilden.

Der erfindungsgemäße Einbaukörper kann zusätzlich auf seinen Wellungen auch Rippen, Noppen, Ausbuchten und dergleichen aufweisen, die zur zusätzlichen Beeinflussung der Strömung der Medien dienen.

## Patentansprüche

1. Einbaukörper für Anlagen, in denen Medien im Direktkontakt sind, zum Energie- und/oder Stoffaustausch oder für chemische oder biologische Reaktionen oder für Misch- und Separationsvorgänge, z.B. für Rieselgitter (Füllkörper) oder Tropfenabscheider in Kühltürmen, für Direkt-Wärmetauscher, für Tropfkörper in biologischen Abwasserreingigungsanlagen, für chemische Kolonnen, für Flüssigkeits- und/oder Gas-Verteiler und -Mischer, für Luftzubringer o. dgl., bestehend aus einer Vielzahl von plattenartigen Folien mit Wellungen vorgegebener Amplitude und Wellenlänge, die zur Bildung von Strömungskanälen Wellenberg gegen Wellental entlang ihres Verlaufes gegeneinander gesetzt und miteinander verbunden sind, wobei gegebenenfalls zwischen zwei Folien mit Wellungen eine plane Folie angeordnet ist, und die Strömungskanäle in Strömungsrichtung mindestens zwei Umlenkungen besitzen und vorzugsweise über ihre Länge unterschiedlich große Querschnitte aufweisen, dadurch gekennzeichnet, daß die einander unmittelbar benachbart liegenden Abschnitte jeweils zweier in Schichtung aufeinanderfolgender Folien ausschließlich zonenweise miteinander verbunden sind und über den anderen Teil ihrer Länge einen die nebeneinander liegenden Strömungskanäle verbindenden Spalt offen lassen, dessen Querschnittsfläche nur einen Bruchteil der Querschnittsflächen der durch ihn verbundenen Strömungskanäle beträgt.

2. Einbaukörper nach Anspruch 1, dadurch gekennzeichnet, daß die die nebeneinander liegenden Strömungskanäle verbindenden Spalte in jenen Längsbereichen der Strömungskanäle vorgesehen sind, die einen gegenüber den anderen Längsbereichen reduzierten Querschnitt aufweisen.

3. Einbaukörper nach Anspruch 1 oder 2, dadurch gekennzeichnet, daß die Breite (Weite) des Spaltes im Bereich zwischen der Oberflächenrauheit bzw. der herstellungsbedingten Mikrowelligkeit der plattenartigen Folie und 1,5 mm liegt.

4. Einbaukörper nach Anspruch 1, dadurch gekennzeichnet, daß die Breite des Spaltes höchstens ein Fünftel des größten Durchmessers des Strömungskanals beträgt.

5. Einbaukörper nach Anspruch 1 oder 2, dadurch gekennzeichnet, daß die Breite (Weite) des Spaltes ein Zehntel bis ein Zwanzigstel der Amplitude der Wellung beträgt.

6. Einbaukörper nach einem der Ansprüche 1 bis 5, dadurch gekennzeichnet, daß die Querschnittskontur zumindest eines einen Spalt in seiner Tiefe begrenzenden Abschnittes zweier benachbart liegender Folien absatzartig gestuft, gewellt oder gezahnt verläuft und der Spalt über seine Tiefe Spaltabschnitte unterschiedlicher Spaltbreite (Spaltweite) aufweist.

7. Einbaukörper nach Anspruch 6, dadurch gekennzeichnet, daß die Querschnittskonturen der einen Spalt in seiner Tiefe begrenzenden Abschnitte zweier benachbart liegender Folien zueinander korrespondierend absatzartig gestuft, gewellt oder gezahnt verlaufen, und der Spalt über seine Tiefe winkelig zueinander stehende Spaltabschnitte aufweist.

8. Einbaukörper nach Anspruch 6 und 7, dadurch gekennzeichnet, daß die über die Tiefe der Spalte verlaufenden, winkelig zueinander stehenden Spaltabschnitte unterschiedliche Spaltbreiten (Spaltweiten) aufweisen.

9. Einbaukörper nach Anspruch 8, dadurch gekennzeichnet, daß die im mittleren Bereich der Tiefe des Spaltes liegenden Spaltabschnitte die größte Spaltbreite (Spaltweite) besitzen.

10. Einbaukörper nach Anspruch 1, dadurch gekennzeichnet, daß die Länge des Spaltes zwischen einem und zwei Drittel der Länge des Strömungskanals beträgt.

11. Einbaukörper nach Anspruch 1 oder 8, dadurch gekennzeichnet, daß über die Länge eines Strömungskanales mehrere Spalte aufeinander folgen.

12. Einbaukörper nach Anspruch 1, dadurch gekennzeichnet, daß die einen Spalt begrenzenden Abschnitte wenigstens zum Teil eine zur Längsrichtung des Spaltes quer verlaufende, wellen- oder zahnförmige Profilierung aufweisen.

13. Einbaukörper nach Anspruch 7, dadurch gekennzeichnet, daß die durch die größte Spaltbreite gebildeten, rinnenartigen Spaltabschnitte durch die Verbindungen der Folien hindurch rohrartig miteinander verbunden sind.

14. Einbaukörper nach Anspruch 12, dadurch gekennzeichnet, daß die rinnenartigen Spaltabschnitte im Bereich der Verbindungsstellen weitergeführt sind und dort seitlich derselben an den Flanken der Kanäle verlaufen.

15. Einbaukörper nach einem der Ansprüche 1 bis 14, dadurch gekennzeichnet, daß die in ihm zwischen benachbarten Strömungskanälen vorgesehenen Spalte einzelner oder aller Wellungen der Wellenscharen der Folien unterschiedlich geformt sind und/oder unterschiedliche Längen aufweisen.

16. Einbaukörper nach Anspruch 3, dadurch gekennzeichnet, daß die Breite (Weite) des Spaltes zwischen 0,05 und 1,00 mm liegt.

17. Einbaukörper nach einem der Ansprüche 1 bis 16, dadurch gekennzeichnet, daß die Strömungskanäle in der Strömungsrichtng der Medien mehrere Umlenkungen aufweisen, also zick-zack- oder schlangenlinienartig verlaufen (Fig. 25).

18. Einbaukörper nach Anspruch 1 oder 17, dadurch gekennzeichnet, daß die Strömungskanäle einen räumlichen Verlauf aufweisen.

## Claims

1. An assembly unit for plants in which media are in direct contact, for energy exchange and/or mass transfer or for chemical or biological reactions or for mixing and separation processes, e.g. for trickling grids (packings) or mist collectors in cooling towers, for direct heat exchangers, for percolating filters in biological waste-water purification plants, for chemical columns, for liquid and/or gas distributors and mixers, for air inlets or the like, consisting of a plurality of panel-like sheets with corrugations of predetermined amplitude and length which, for the purpose of forming flow channels, are set against each other and joined to each other ridge against trough along their course, a flat sheet possibly being positioned between two sheets having corrugations, and the flow channels having at least two deflections in the direction of flow and preferably having cross-sections of differing size over their length, characterised in that the immediately mutually adjacent sections of each pair of sheets following each other in layers are joined together only in places and, over the other part of their length, leave open a gap joining the flow channels lying side by side, the cross-section of said gap being only a fraction of the cross-sectional areas of the flow channels joined thereby.

2. An assembly unit as claimed in Claim 1, characterised in that the gaps joining the flow channels lying side by side are provided in those longitudinal areas of the flow channels which have a reduced cross-section compared with the other longitudinal areas.

3. An assembly unit as claimed in Claim 1 or Claim 2, characterised in that the breadth (width) of the gap is in the range between the surface roughness or manufactured micro-corrugation of the panel-like sheet and 1.5 mm.

4. An assembly unit as claimed in Claim 1, characterised in that the breadth of the gap does not exceed one fifth of the maximum diameter of the flow channel.

5. An assembly unit as claimed in Claim 1 or Claim 2, characterised in that the breadth (width) of the gap is one tenth to one twentieth of the amplitude of the corrugation.

6. An assembly unit as claimed in one of Claims 1 to 5, characterised in that the shape of the cross-sectional contour of at least one section, demarcating a gap in its depth, of two adjacent sheets is stepped in a ledge-like manner, corrugated or toothed and the gap, over its depth, has gap sections of differing gap breadth (gap width).

7. An assembly unit as claimed in Claim 6, characterised in that the shape of the cross-sectional contours of the sections, demarcating a gap in its depth, of two adjacent sheets is matchingly stepped in a ledge-like manner, corrugated or toothed and the gap, over its depth, has gap sections angled towards each other.

8. An assembly unit as claimed in Claims 6 and 7, characterised in that the gap sections angled towards each other and running over the depth of the gaps have differing gap breadths (gap widths).

9. An assembly unit as claimed in Claim 8, characterised in that the gap sections in the central area of the depth of the gap have the largest gap breath (gap width).

10. An assembly unit as claimed in Claim 1, characterised in that the length of the gap is between one and two thirds of the length of the flow channel.

11. An assembly unit as claimed in Claim 1 or Claim 8, characterised in that there are several consecutive gaps over the length of one flow channel.

12. An assembly unit as claimed in Claim 1, characterised in that the sections demarcating a gap have, at least in part, a corrugated or toothed profiling running at right angles to the longitudinal direction of the gap.

13. An assembly unit as claimed in Claim 7, characterised in that the groove-like gap sections formed by the maximum gap breadth are joined to each other throughout like a pipe by the joins between the sheets.

14. An assembly unit as claimed in Claim 12, characterised in that the groove-like gap sections are extended in the area of the joins and run laterally of the same there at the sides of the channels.

15. An assembly unit as claimed in one of Claims 1 to 14, characterised in that the gaps, which are provided therein between adjacent flow channels, of some or all of the corrugations of the corrugation systems of the sheets are of differing shapes and/or have differing lengths.

16. An assembly unit as claimed in Claim 3, characterised in that the breadth (width) of the gap is between 0.05 and 1.00 mm.

17. An assembly unit as claimed in one of Claims 1 to 16, characterised in that, in the direction of flow of the media, the flow channels have several deflections, that is to say, are zigzag or serpentine in shape (Fig. 25).

18. An assembly unit as claimed in Claim 1 or Claim 17, characterised in that the flow channels are of a three-dimensional nature.

## Revendications

1. Corps à encastrer pour installations dans lesquelles des milieux sont en contact direct, dans le cadre d'un échange d'énergie et/ou de transfert de matière ou pour des réactions chimiques ou biologiques ou encore pour des opérations de mélange et de séparation, par exemple, pour réseaux de ruissellement (corps de remplissage) ou séparateurs de gouttes dans des tours de refroidissement, pour échangeurs de chaleur directs, pour lits percolateurs dans des installations biologiques d'épuration d'eaux usées, pour colonnes chimiques, pour distributeurs et mélangeurs de liquides et/ou de gaz, pour dispositifs d'amenée d'air ou des dispositifs analogues, le corps étant constitué d'une série de feuilles en forme de plaques présentant des ondulations d'amplitude et de longueur prédéterminées, qui sont placées l'une contre l'autre et reliées l'une à l'autre le long de leur parcours, sommet d'ondulation contre fond d'ondulation, pour former des canaux d'écoulement, une feuille plane étant éventuellement agencée entre deux feuilles ondulées, et les canaux d'écoulement présentant dans la direction d'écoulement au moins deux changements de direction et de préférence des sections transversales de différentes dimensions sur leur longueur, caractérisé en ce que les sections directement voisines l'une de l'autre, respectivement, de deux feuilles se succédant dans la stratification sont reliées l'une à l'autre exclusivement par zones et laissent ouverte une fente reliant les canaux d'écoulement qui se trouvent l'un à côté de l'autre sur l'autre partie de leur longueur, fente dont la surface en coupe transversale n'atteint qu'une fraction des surfaces en coupe transversale des canaux d'écoulement qui lui sont raccordés.

2. Corps à encastrer selon la revendication 1, caractérisé en ce que les fentes reliant les canaux d'écoulement qui se trouvent l'un à côté de l'autre sont prévues dans les zones longitudinales des canaux d'écoulement qui présentent une section transversale réduite vis-à-vis des autres zones longitudinales.

3. Corps à encastrer selon la revendication 1 ou 2, caractérisé en ce que l'ordre de grandeur de la largeur de la fente correspond aux tolérances des rugosités superficielles ou des micro-ondulations formées au cours de la fabrication de la feuille en forme de plaque et atteint 1,5 mm.

4. Corps à encastrer selon la revendication 1, caractérisé en ce que la largeur de la fente est au maximum d'un cinquième du plus grand diamètre du canal d'écoulement.

5. Corps à encastrer selon la revendication 1 ou 2, caractérisé en ce que la largeur de la fente est d'un dixième à un vingtième de l'amplitude de l'ondulation.

6. Corps à encastrer selon l'une quelconque des revendications 1 à 5, caractérisé en ce que le contour en coupe transversale d'au moins une section des deux feuilles voisines délimitant une fente dans sa profondeur s'étend en forme étagée, ondulée ou dentée et la fente présente sur sa profondeur des sections de fente de diverses largeurs.

7. Corps à encastrer selon la revendication 6, caractérisé en ce que les contours en coupe transversale des sections de deux feuilles voisines délimitant une fente sur leur profondeur s'étendent de manière correspondante l'une vis-à-vis de l'autre en forme étagée, ondulée ou dentée et la fente présente sur sa profondeur des sections de fente qui s'étendent l'une par rapport à l'autre selon un certain angle.

8. Corps à encastrer selon les revendications 6 et 7, caractérisé en ce que les sections de fente qui s'étendent sur la profondeur de la fente et sont disposées selon un certain angle l'une par rapport à l'autre présentent des largeurs différentes.

9. Corps à encastrer selon la revendication 8, caractérisé en ce que les sections de fente qui se trouvent dans la région centrale de la profondeur de la fente possèdent la plus grande largeur.

10. Corps à encastrer selon la revendication 1, caractérisé en ce que la longueur de la fente est comprise entre un et deux tiers de la longueur du canal d'écoulement.

11. Corps à encastrer selon la revendication 1 ou 8, caractérisé en ce que plusieurs fentes se succèdent sur la longueur d'un canal d'écoulement.

12. Corps à encastrer selon la revendication 1, caractérisé en ce que les sections délimitant une fente présentent au moins en partie un profil ondulé ou denté s'étendant transversalement à la direction longitudinale de la fente.

13. Corps à encastrer selon la revendication 7, caractérisé en ce que les sections de fente en forme de rigoles formées par la plus grande largeur de la fente sont reliées l'une à l'autre à la manière de tubes à travers les raccordements des feuilles.

14. Corps à encastrer selon la revendication 12, caractérisé en ce que les sections de fente en forme de rigoles sont prolongées dans la zone des points de raccordement et s'y étendent latéralement à ceux-ci sur les flancs des canaux.

15. Corps à encastrer selon l'une quelconque des revendications 1 à 14, caractérisé en ce que les fentes, prévues dans ledit corps entre des canaux d'écoulement voisins, de certaines ou de toutes les ondulations des assemblages ondulés de feuilles sont conformées de manière différente et/ou présentent des longueurs différentes.

16. Corps à encastrer selon la revendication 3, caractérisé en ce que la largeur de la fente est comprise entre 0,05 et 1,00 mm.

17. Corps à encastrer selon l'une quelconque des revendications 1 à 16, caractérisé en ce que les canaux d'écoulement présentent dans la direction d'écoulement des milieux plusieurs changements de direction et s'étendent donc en zigzag ou en serpentin (Fig. 25).

18. Corps à encastrer selon la revendication 1 ou 17, caractérisé en ce que les canaux d'écoulement ont un parcours à trois dimensions.
